# EUROPEAN PATENT SPECIFICATION

(11) **EP 2 945 971 B1**
(45) Date of publication and mention of the grant of the patent: **02.12.2020**
(21) Application number: 14700632.4
(22) Date of filing: 14.01.2014
(51) Int. Cl.: C08F 110/08, C08F 4/651, C08F 10/08

(54) **CATALYST COMPONENTS FOR THE POLYMERIZATION OF OLEFINS**
KATALYSATORKOMPONENTEN ZUR OLEFINPOLYMERISATION
COMPOSANTS DE CATALYSEUR POUR LA POLYMÉRISATION D'OLÉFINES

(30) Priority: 18.01.2013 EP 13151769; 18.01.2013 US 201361754192 P
(43) Date of publication of application: 25.11.2015
(73) Proprietor: Basell Poliolefine Italia S.r.l., 20121 Milano (IT)
(72) Inventor: VITALE, Gianni, I-44122 Ferrara (IT); ESPOSITO, Simona, I-44122 Ferrara (IT); GUIDOTTI, Simona, I-44122 Ferrara (IT); MIGNOGNA, Alessandro, I-44122 Ferrara (IT); MORINI, Giampiero, I-44122 Ferrara (IT); PIEMONTESI, Fabrizio, I-44122 Ferrara (IT)
(74) Representative: LyondellBasell
(86) International application number: PCT/EP2014/050606
(87) International publication number: WO 2014/111381

(56) References cited:
- EP-A1- 2 360 190
- EP-A2- 0 187 034
- WO-A1-00/55215

## Description

### FIELD OF THE INVENTION

The present invention relates to a process for preparing polybutene-1 with high activity and stereoregularity using a specific Ziegler-Natta catalyst component for the polymerization of olefins, in particular propylene, comprising a Mg dihalide based support on which are supported Ti atoms and at least an electron donor selected from a specific class of dimethyl substituted glutarates.

### BACKGROUND OF THE INVENTION

Polybutene-1 homo and co-polymers (PB-1) are well known in the art. In view of their good properties in terms of pressure resistance, creep resistance, and impact strength they are mainly used in the manufacture of pipes to be used in the metal pipe replacement. In general, polybutene-1 homo and co-polymers can be prepared by polymerizing butene-1 in the presence of Ziegler-Natta based catalysts. However, not all the ZN catalysts are capable to produce polybutene-1 with the requested features in terms of activity, stereospecificity, molecular weight and molecular weight distribution in order to render it susceptible of industrial exploitation. Typically, a suitable catalyst for PB-1 industrial production comprises (A) a solid component comprising a Ti compound and a phthalate as an electron-donor compound supported on MgCl₂; (B) an alkylaluminum compound and, (C) an external electron-donor compound selected from alkylalkoxysilanes. Polybutene-1 produced with this kind of catalyst is disclosed for example in EP-A-172961, WO99/45043 and WO03/099883.

Use of some phthalates however, has been recently addressed as involving potential toxicity problems and therefore intense research activity have been devoted to find alternative classes of donors capable of replacing phthalates in terms of both performances in polymerization and quality of the polymer product.

The problem of finding a proper replacement for phthalates in the PB-1 production is not an easy solution because of the unpredictability of results in butene-1 polymerization with respect to the data available for other olefin, e.g. propylene, polymerization. In fact, several classes of diesters, for example those disclosed in US 7,388,061 have demonstrated the capability of giving good performances in the propylene polymerization while they have surprisingly proved to be much inferior in the butene-1 polymerization thereby making fruitless any attempt of prediction on the basis of propylene polymerization data.

The quite unpredictable behavior of the different class of donors was confirmed also among members within the same class of donors. WO2000/055215 discloses the use of β-substituted glutarates for preparation of catalyst for olefin, in particular propylene, polymerization. According to the patent application, a particular interesting subgroup of substituted glutarates is that in which two hydrocarbon subtsituents are placed in beta-position. Tables 1 and 2 show that for the propylene polymerization the beta disubstitued glutarates are generally better in terms of activity/stereospecificity balance. However, when tested in the preparation of polybutene, it is generally noticed a decrease in the catalyst performances both in terms of activity and stereospecificity. In particular, even some of the disubstituted structures that were best performing in propylene production showed in PB-1 production a more than 50% reduction in catalyst activity and an isotactic index, measured as xylene insolubility, that reached the unsatisfactory level of less than 98%.

### SUMMARY OF THE INVENTION

For this reason, it was very surprising to discover that only a specific subclass of glutarates is really effective and advantageous in butene-1 polymerization.

It is therefore an object of the present invention a process for the polymerization of butene-1 carried out in the presence of a catalyst comprising
(a) a solid catalyst component comprising Mg, Ti and an electron donor compound of the following formula (I) 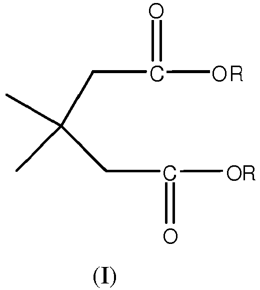 in which the R groups equal to or different from each other, are C₁-C₁₀ hydrocarbon groups;
(b) an aluminium alkyl cocatalyst and
(c) an external electron donor.

### DETAILED DESCRIPTION OF THE INVENTION

Preferably R groups are selected from C₁-C₁₀ hydrocarbon groups more preferably from primary C₁-C₅ alkyl groups, such as methyl, ethyl, or isobutyl. Among them, ethyl and isobutyl are preferred. In a more preferred aspect both R groups of formula (I) are equal.

As explained above, the catalyst component (a) of the invention comprises, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl₄ and TiCl₃; furthermore, also Ti-haloalcoholates of formula Ti(OR)_{q-y}X_{y} can be used, where q is the valence of titanium, y is a number between 1 and q-1, X is halogen and R is a hydrocarbon radical having from 1 to 10 carbon atoms.
The preparation of the solid catalyst component can be carried out according to several methods.

According to one of these methods, the magnesium dichloride in an anhydrous state, the titanium compound and the electron donor compounds are milled together under conditions in which activation of the magnesium dichloride occurs. The so obtained product can be treated one or more times with an excess of TiCl₄ at a temperature between 80 and 135°C. This treatment is followed by washings with hydrocarbon solvents until chloride ions disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. Another method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-135°C and kept at this temperature for 0.5-2 hours. The treatment with TiCl₄ can be carried out one or more times. The electron donor compounds can be added in the desired ratios during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g, preferably between 0.2 and 0.6 cm³/g. The porosity (Hg method) due to pores with radius up to 10.000Å generally ranges from 0.3 to 1.5 cm³/g, preferably from 0.45 to 1 cm³/g.
The solid catalyst component has an average particle size ranging from 5 to 120 µm and more preferably from 10 to 100 µm.

As mentioned, in any of these preparation methods the desired electron donor compounds can be added as such or, in an alternative way, can be obtained *in situ* by using an appropriate precursor capable of being transformed in the desired electron donor compound by means, for example, of known chemical reactions such as etherification, alkylation, esterification, transesterification etc.

Regardless of the preparation method used, the final amount of the electron donor compound of formula (I) is such that its molar ratio with respect to the Ti atoms is from 0.01 to 3, preferably from 0.2 to 2, more preferably from 0.3-1.5.

The alkyl-Al compound (b) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

Suitable external electron-donor compounds (c) include silicon compounds, ethers, esters, amines, heterocyclic compounds and particularly 2,2,6,6-tetramethylpiperidine and ketones.

Another class of preferred external donor compounds is that of silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈, are alkyl, cycloalkyl or aryl radicals with 1-18 carbon atoms optionally containing heteroatoms. Particularly preferred in the preparation of polybutene-1 are the silicon compounds in which, at least one of R₆ and R₇ is selected from branched alkyl or cycloalkyl groups with 3-10 carbon atoms and R₈ is a C₁-C₁₀ alkyl group, in particular methyl. Examples of such preferred silicon compounds are diisopropyldimethoxysilane, t-butyltrimethoxysilane and thexyltrimethoxysilane and dicyclopentyldimethoxysilane.

The electron donor compound (c) is used in such an amount to give a molar ratio between the organoaluminum compound and said electron donor compound (iii) of from 0.1 to 500, preferably from 1 to 300 and more preferably from 3 to 150.

The polymerization process can be carried out according to known techniques, for example solution or slurry polymerization using as solvent or diluent an inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred.

The polymerization is generally carried out at temperature of from 20 to 120°C, preferably from 40 to 90°C. In the liquid bulk polymerization the operating pressure is generally between 0.1 and 6 MPa preferably between 1.0 and 4 MPa. The polymerization can be carried out in one or more reactors that can work under same or different reaction conditions such as concentration of molecular weight regulator, monomer concentration, temperature, pressure etc. Working in more than one reactor under different conditions can lead to the preparation of polybutenes with different average Molecular Weight in the two reactors and therefore with a broader MWD optionally of bimodal type. Moreover, working in more than one reactor under different conditions has the advantage that the various polymerization step can be properly modulated so as to properly tailoring the properties of the final polymer.

In addition, in order to make the catalyst particularly suitable for the polymerization step, it is possible to prepolymerize said catalyst in a prepolymerization step. Said prepolymerization can be carried out in liquid, (slurry or solution) or in the gas-phase, at temperatures generally lower than 100°C, preferably between 20 and 70°C. The prepolymerization step is carried out with small quantities of monomers for the time which is necessary to obtain the polymer in amounts of between 0.5 and 2000 g per g of solid catalyst component, preferably between 5 and 500 and, more preferably, between 10 and 100 g per g of solid catalyst component. The monomer used in the prepolymerization can be butene-1 and/or another α-olefin having from 2 to 10 carbon atoms. Preferably, the prepolymerization is carried out with propylene. In this case it is particularly preferable to carry out the prepolymerization with monomer amounts and polymerization times necessary to obtain a polypropylene content of from 0.5 to 20%, preferably from 1 to 15% based on the weight of the final polybutene-1 product. Although reactor blends are preferable in terms of homogeneity of the polymer, good results can be obtained by blending the polybutene-1 of the invention with an amount of propylene homopolymer or copolymer ranging from 0.5 to 20% by weight of the resulting composition.

The polybutenes of the invention can be used as such in all the applications for which polybutenes are generally employed. However, as it is known to the experts in this field, and as it can be easily determined by routine tests, it is possible to add further polymer components, additives (such as stabilizers, antioxidants, anticorrosives, nucleating agents, processing aids, etc.) and both organic and inorganic fillers which can give specific properties to the products of the invention.

The following examples are given in order to better illustrate the invention without limiting it.

As explained the catalyst shows very interesting performances in the polymerization of propylene but also in the polymerization of butene-1 being able to generate polybutene-1 in high yields and high stereospecificity.
The following examples are given in order to better illustrate the invention without limiting it.

### EXAMPLES

### CHARACTERIZATIONS

### Determination of Ti

The determination of Ti content in the solid catalyst component has been carried out via inductively coupled plasma emission spectroscopy on "I.C.P Spectrometer ARL Accuris".The sample was prepared by analytically weighting, in a "fluxy" platinum crucible", 0.1÷0.3 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then the titanium was analyzed via ICP at a wavelength of 368.52 nm.

### Determination of internal donor content

The determination of the content of internal donor in the solid catalytic compound was done through gas chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Determination of X.I. of polybutene

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 0°C under continuous stirring, and the insoluble polymer was then filtered at 0°C. The filtrate was then evaporated in a nitrogen flow at 140°C to reach a constant weight. The content of said xylene-soluble fraction is expressed as a percentage of the original 2.5 grams and then, by difference, the X.I. %.

### Determination of X.I. of polypropylene

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of intrinsic viscosity (IV)

A weighed amount of the sample was dissolved in tetrahydronaphthalene (THN) at 135°C controlled temperature. The flow time of this diluted solution is determined with a Sematech Cinevisco system equipped with an Ubbelhode modified capillary viscometer, which is thermostated at 135°C. Irganox 1010 was added as an antioxidant to minimize degradation phenomena of the molecular weight. The IV calculations were performed by using the Huggins' equation and assuming the Huggins' coefficient equal to 0.35. The flow times of solvents and solutions were corrected taking into account the contributions due to the kinetic energy. The solution concentrations were evaluated taking into account the change of THN volumes from room temperature to 135°C.

### Determination of polypropylene Melt Index "MIL"

The melt flow rate MIL of the polymer was determined according to ISO 1133 (230° C, 2.16 Kg)

### EXAMPLES

### Procedure for preparation of the spherical adduct

An initial amount of microspheroidal MgCl₂·2.8C₂H₅OH was prepared according to the method described in Example 2 of WO98/44009, but operating on larger scale. The support adduct had a P50 of about 25 micron, and an ethanol content of about 58%wt.

### General procedure for the preparation of solid catalyst component

Into a 500 ml four-necked round flask, purged with nitrogen, 250 ml of TiCl₄ were introduced at 0°C. While stirring, 10 g of spherical adduct prepared as described above were added. The flask was mantained at 0°C and the indicated internal electron donor compound was added, such to meet the indicated molar ratio Mg/ID = 6. The temperature was raised to the indicated value and maintained for the indicated titanation time (data in Table 1). Then stirring was discontinued, the solid product was allowed to settle and the supernatant liquid was siphoned off.

Fresh TiCl₄ was added in such an amount to reach the initial liquid level. Temperature was brought to the indicated temperature for the indicated time (Table 1), and siphoning was repeated. Optionally, a third titanation step was applied. The obtained solid was washed four times with anhydrous heptane (4 x 100 ml) at 90°C and two times with anhydrous iso-hexane (2 x 100 ml) at 25°C then dried under vacuum. Composition of solid catalyst precursors are reported in Table 1.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, a suspension containing 75 ml of anhydrous hexane, 0.76 g of TEAL (triethylaluminum) (6.66 mmol), 0.33 mmol of dicyclopentyldimethoxysilane and 0.006 ÷ 0.010 g of solid catalyst component, previously precontacted for 5 minutes, was charged. The autoclave was closed; subsequently 2.0 NL of hydrogen were added. Then, under stirring, 1.2 kg of liquid propylene was fed. The temperature was raised to 70°C in ten minutes and the polymerization was carried out at this temperature for two hours. At the end of the polymerization, the non-reacted propylene was removed; the polymer was recovered and dried at 70°C under vacuum for three hours. Then the polymer was weighed and analyzed.

### Procedure for the bulk polymerization of butene-1

In a 4 liter autoclave, purged with nitrogen flow at 70 °C for one hour, 12 ml of anhydrous hexane containing 3.5 mmol of triisobutylaluminum were introduced in nitrogen flow at 30 °C. Then, 1.35 kg of liquid butene-1 were fed, temperature was raised to 75°C, and 1 NL of hydrogen was added. To start the polymerization, 50 ml of catalyst suspension in anhydrous hexane were injected, the suspension containing 3.5 mmol of triisobutylaluminum (Tibal), 6 mg of solid catalyst component, and 0.175 mmol of thexyl-trimethoxysilane as external donor, in order to have a Tibal/ED molar ratio of 40 during the polymerization.

The polymerization was carried out at 75°C for 2 hours. The poly-butene-1 polymer was collected by flashing off the residual butene-1 monomer. The polymer was dried under nitrogen overnight at 70°C. The results are listed in Table 2.

### Examples 1-7 and Comparative Examples C1 - C5

Solid catalyst components were prepared, using the general method described above. In the examples, titanation conditions are indicated in Table 1.

The obtained solids were dried as described above, and characterized using the methods described above. The results of this characterization is indicated in Table 1. Then, they were employed in the polymerization of propylene and butene-1 according to the general procedures. The results are reported in Table 2.

### Examples 8-10

The solid catalyst component described in example 4 was employed in the polymerization of butene-1 according to the general polymerization procedure with the difference that the specific conditions reported in Table 3 have been used. In the same table are also reported the polymerization results.

**TABLE 1**

| | **Internal donor** | **Titanations** | | | **Composition** | |
|---|---|---|---|---|---|---|
| **Ex.** | **Type** | **1^{st} tit** | **2^{nd} tit** | **3^{rd} tit** | **Ti** | **ID** |
| | | T/t | T/t | T/t | wt% | wt% |
| | | °C/h | °C/h | °C/h | | |
| 1 | DEDMG | 100/2 | 120/1 | - | 2.6 | 13.0 |
| 2 | DIBDMG | 120/2 | 120/1 | | 2.3 | 12.9 |
| C1 | DEIPMG | 100/2 | 120/1 | - | 2.8 | 15.4 |
| C2 | DEDIBG | 100/2 | 120/1 | - | 3.1 | 18.1 |
| C3 | DEDCG | 100/2 | 120/1 | - | 3.4 | 16.9 |
| C4 | DEDIPG | 100/2 | 120/1 | - | 2.7 | 9.7 |
| 3 | DEDMG | 100/2 | 120/1 | 120/0.5 | 2.2 | 13.6 |
| 4 | DIBDMG | 100/2 | 120/1 | 120/0.5 | 2.3 | 11.3 |
| 5 | DPDMG | 100/2 | 120/1 | 120/0.5 | 2.4 | 11.4 |
| 6 | DBDMG | 100/2 | 120/1 | 120/0.5 | 2.6 | 10.3 |
| 7 | DMBDMG | 100/2 | 120/1 | 120/0.5 | 2.7 | 12.6 |
| C5 | DEDIBG | 120/2 | 120/1 | 120/0.5 | 2.9 | 11.0 |

| | | | | | | |
|---|---|---|---|---|---|---|
| DEDMG diethyl 3,3-dimethylglutarate DIBDMG diisobutyl 3,3-dimethylglutarate DEIPMG diethyl 3-isopropyl-3-methylglutarate DEDIBG diethyl 3,3-diisobutylglutarate DEDCG diethyl 3,3-dicyclopentylglutarate DEDIPG diethyl 3,3-diisopropylglutarate DPDMG dipropyl 3,3-dimethylglutarate DBDMG dibutyl 3,3-dimethylglutarate DMBDMG di-2-methylbutyl 3,3-dimethylglutarate | | | | | | |

**Table 2.**

| **Ex.** | Propylene Polymerization | | | Butene-1 polymerization | | |
|---|---|---|---|---|---|---|
| | Mileage | XI | MIL | Mileage | XI | IV |
| | kg/g | % | g/10' | kg/g | wt% | dL/g |
| 1 | 39 | 98.6 | 1.8 | 22 | 98.5 | 1.85 |
| 2 | 51 | 98.5 | 1.8 | 28 | 98.4 | 1.74 |
| C1 | 40 | 98.6 | nd | 16 | 97.9 | 1.78 |
| C2 | 61 | 98.0 | 9.3 | 28 | 97.3 | 1.98 |
| C3 | 58 | 98.1 | 4.6 | 14 | 97.0 | 1.96 |
| C4 | 53 | 98.5 | 2.6 | 29 | 97.0 | 1.69 |
| 3 | 43 | 98.6 | 1.4 | 34 | 98.5 | 1.84 |
| 4 | 55 | 98.6 | 1.7 | 53 | 98.3 | 1.93 |
| 5 | 53 | 98.7 | 1.9 | 40. | 98.3 | 1.72 |
| 6 | 57 | 98.4 | 2.5 | 46 | 98.3 | 1.86 |
| 7 | 58. | 98.3 | 2.6 | 36 | 98.2 | 1.85 |
| C5 | 83 | 98.3 | 1.5 | 45 | 97.7 | 1.67 |

**Table 3.**

| **Ex.** | Polymerization Conditions | | | Butene-1 polymerization | | |
|---|---|---|---|---|---|---|
| | Al/ED m | ED | H₂- T° | Mileage | XI | IV |
| | ratio | Type | cm³-°C | kg/g | wt% | dL/g |
| 8 | 20 | P | 200-70 | 17.7 | 98.2 | 2.9 |
| 9 | 40 | T | 200-70 | 26.9 | 98.7 | 3.35 |
| 10 | 40 | TTMS | 200-70 | 35.0 | 98.9 | 3.24 |

| | | | | | | |
|---|---|---|---|---|---|---|
| P= diisopropyl dimethoxysilane T= thexyl trimethoxysilane TTMS= tert-butyl trimethoxysilane | | | | | | |

## Claims

1. A liquid phase process for the homo and copolymerization of butene-1 carried out in the presence of a catalyst comprising
(a) a solid catalyst component comprising Mg, Ti and an electron donor compound of the following formula (I) 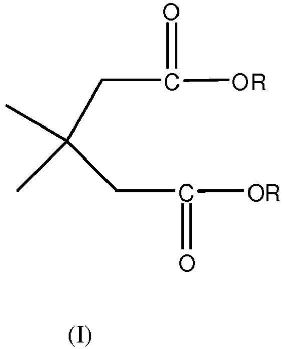 in which the R groups, equal to or different from each other, are C₁-C₁₀ hydrocarbon groups;
(b) an aluminium alkyl cocatalyst and
(c) an external electron donor.

2. The process according to claim 1 in which R groups are equal and selected from primary C₁-C₅ alkyl groups.

3. The process according to claim 2 in which R groups are equal.

4. The process according to claim 2 in which R is ethyl or isobutyl.

5. The process according to claim 1 in which the alkyl-Al compound (b) is chosen among the trialkyl aluminum compounds.

6. The process according to claim 1 in which the external electron donor is selected silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈, are alkyl, cycloalkyl or aryl radicals with 1-18 carbon atoms optionally containing heteroatoms.

7. The process according to claim 1 in which at least one of R₆ and R₇ is selected from branched alky with 3-10 carbon atoms and R₈ is a C₁-C₁₀ alkyl group.

8. The process according to claim 7 in which the external donor is selected from the group consisting of diisopropyldimethoxysilane, t-butyltrimethoxysilane, thexyltrimethoxysilane and dicyclopentyldimethoxysilane

## Patentansprüche

1. Flüssigphasenverfahren zur Homo- und Copolymerisation von Buten-1, das in Gegenwart eines Katalysators durchgeführt wird, der folgendes umfasst:
(a) eine feste Katalysatorkomponente, umfassend Mg, Ti und eine Elektronendonorverbindung mit der folgenden Formel (I): 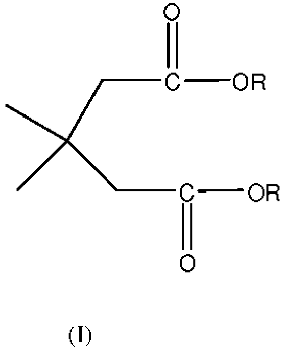 wobei die Gruppen R, die gleich oder voneinander verschieden sind, C₁- bis C₁₀-Kohlenwasserstoffgruppen sind;
(b) einen Aluminiumalkylcokatalysator und
(c) einen externen Elektronendonor.

2. Verfahren nach Anspruch 1, wobei die Gruppen R gleich sind und ausgewählt sind aus primären C₁- bis Cs-Alkylgruppen.

3. Verfahren nach Anspruch 2, wobei die Gruppen R gleich sind.

4. Verfahren nach Anspruch 2, wobei R Ethyl oder Isobutyl ist.

5. Verfahren nach Anspruch 1, wobei die Alkyl-Al-Verbindung (b) ausgewählt ist aus den Trialkylaluminiumverbindungen.

6. Verfahren nach Anspruch 1, wobei der externe Elektronendonor ausgewählte Siliciumverbindungen der Formel (R₆)ₐ(R₇)_{b}Si(OR₈)_{c} ist, wobei a und b ganze Zahlen von 0 bis 2 sind, c eine ganze Zahl von 1 bis 4 ist und die Summe (a+b+c) 4 ist; R₆, R₇ und R₈ Alkyl-, Cycloalkyl- oder Arylreste mit 1 bis 18 Kohlenstoffatomen sind, die gegebenenfalls Heteroatome enthalten.

7. Verfahren nach Anspruch 1, wobei mindestens einer von R₆ und R₇ ausgewählt ist aus verzweigtem Alkyl mit 3 bis 10 Kohlenstoffatomen, und R₈ eine C₁- bis C₁₀-Alkylgruppe ist.

8. Verfahren nach Anspruch 7, wobei der externe Donor ausgewählt ist aus der Gruppe bestehend aus Diisopropyldimethoxysilan, t-Butyltrimethoxysilan, t-Hexyltrimethoxysilan und Dicyclopentyldimethoxysilan.

## Revendications

1. Procédé en phase liquide pour l'homopolymérisation et la copolymérisation de butène-1 mis en œuvre en présence d'un catalyseur comprenant
(a) un constituant catalytique solide comprenant du Mg, du Ti et un composé donneur d'électrons de la formule suivante (I) 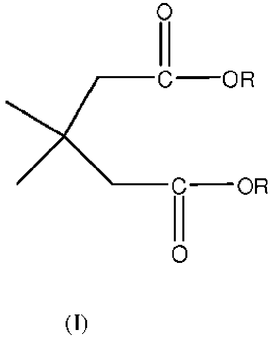 dans laquelle les groupes R, identiques ou différents l'un de l'autre, sont des groupes hydrocarbonés en C₁-C₁₀ ;
(b) un cocatalyseur d'alkylaluminium et
(c) un donneur d'électrons externe.

2. Procédé selon la revendication 1, dans lequel les groupes R sont identiques et choisis parmi les groupes alkyle primaire en C₁-C₅.

3. Procédé selon la revendication 2, dans lequel les groupes R sont identiques.

4. Procédé selon la revendication 2, dans lequel R représente éthyle ou isobutyle.

5. Procédé selon la revendication 1, dans lequel le composé d'alkyl-Al (b) est choisi parmi les composés de trialkylaluminium.

6. Procédé selon la revendication 1, dans lequel le donneur d'électrons externe est choisi parmi les composés de silicium de formule (R₆)ₐ(R₇)bSi(OR₈)_{c}, où a et b représentent des nombres entiers de 0 à 2, c représente un nombre entier de 1 à 4 et la somme (a + b + c) vaut 4 ; R₆, R₇ et R₈ représentent des radicaux alkyle, cycloalkyle ou aryle comprenant 1 à 18 atomes de carbone contenant éventuellement des hétéroatomes.

7. Procédé selon la revendication 1, dans lequel au moins un radical parmi R₆ et R₇ est choisi parmi alkyle ramifié comprenant 3 à 10 atomes de carbone et R₈ représente un groupe alkyle en C₁-C₁₀.

8. Procédé selon la revendication 7, dans lequel le donneur externe est choisi dans le groupe constitué par le diisopropyldiméthoxysilane, le t-butyltriméthoxysilane, le t-hexyltriméthoxysilane et le dicyclopentyldiméthoxysilane.
